(19) Europäisches Patentamt
European Patent Office
Office européen des brevets

(11) **EP 3 014 890 B1**

(12) **EUROPEAN PATENT SPECIFICATION**

(45) Date of publication and mention
of the grant of the patent:
**12.06.2019 Bulletin 2019/24**

(51) Int Cl.:
***H04N 21/2383*** *(2011.01)*   ***H04N 21/24*** *(2011.01)*
***G06F 1/32*** *(2019.01)*

(21) Application number: **14818199.3**

(22) Date of filing: **25.06.2014**

(86) International application number:
**PCT/KR2014/005656**

(87) International publication number:
**WO 2014/209023 (31.12.2014 Gazette 2014/53)**

(54) **DYNAMIC VOLTAGE/FREQUENCY SCALING FOR VIDEO PROCESSING USING EMBEDDED COMPLEXITY METRICS**

DYNAMISCHE SPANNUNGS-/FREQUENZSKALIERUNG ZUR VIDEOVERARBEITUNG UNTER VERWENDUNG EINGEBETTETER KOMPLEXITÄTSMETRIKEN

MISE À L'ÉCHELLE DYNAMIQUE TENSION/FRÉQUENCE POUR TRAITEMENT DE VIDÉO UTILISANT DES MÉTRIQUES INCORPORÉES DE COMPLEXITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.06.2013  US 201361839266 P**
**25.06.2013  US 201361839271 P**
**25.06.2013  US 201361839275 P**
**23.07.2013  US 201361857543 P**
**26.11.2013  US 201314091238**

(43) Date of publication of application:
**04.05.2016  Bulletin 2016/18**

(73) Proprietor: **Samsung Electronics Co., Ltd.**
**Gyeonggi-do 16677 (KR)**

(72) Inventors:
• **FERNANDES, Felix Carlos**
**Richardson, TX 75082 (US)**
• **DONG, Mian**
**Richardson, TX 75082 (US)**
• **LI, Xin**
**Richardson, TX 75082 (US)**
• **HWANG, Sung-Oh**
**Suwon-si, Gyeonggi-do 16677 (KR)**
• **MA, Zhan**
**Richardson, TX 75082 (US)**

(74) Representative: **Gulde & Partner**
**Patent- und Rechtsanwaltskanzlei mbB**
**Wallstraße 58/59**
**10179 Berlin (DE)**

(56) References cited:
**US-A1- 2003 118 112      US-A1- 2009 112 931**
**US-A1- 2012 042 313      US-A1- 2012 066 526**
**US-A1- 2012 151 065**

• **"Context, Objectives, Use Cases and Requirements for Green MPEG", 104. MPEG MEETING;22-4-2013 - 26-4-2013; INCHEON; (MOTION PICTURE EXPERT GROUP OR ISO/IEC JTC1/SC29/WG11),, no. N13468, 29 April 2013 (2013-04-29), XP030020218,**
• **LIVIU CODRUT STANCU ET AL: "AVid: Annotation driven video decoding for hybrid memories", EMBEDDED SYSTEMS FOR REAL-TIME MULTIMEDIA (ESTIMEDIA), 2012 IEEE 10TH SYMPOSIUM ON, IEEE, 11 October 2012 (2012-10-11), pages 2-11, XP032383717, DOI: 10.1109/ESTIMEDIA.2012.6507022 ISBN: 978-1-4673-4968-0**
• **"Preliminary WD of Green MPEG", 105. MPEG MEETING;29-7-2013 - 2-8-2013; VIENNA; (MOTION PICTURE EXPERT GROUP OR ISO/IEC JTC1/SC29/WG11),, no. N13719, 2 August 2013 (2013-08-02), XP030020467,**

## Description

## BACKGROUND OF THE INVENTION

## 1. Field of the Invention

The present application relates generally to video processing devices and, more specifically, to methods for dynamic voltage and frequency scaling for video processing in order to reduce power usage.

## 2. Description of the Related Art

Power consumption is an increasingly critical issue for video-capable mobile devices, where video processing requires a significant amount of energy for video encoding, decoding and associated memory transfers. Video codecs in mobile devices can be implemented using either software on the CPU, such as an ARM (Advanced RISC Machines) platform, or hardware via dedicated ASIC (application specific integrated circuit) design. Recent advances in circuits design have demonstrated that power consumption can be reduced if circuits are placed into a low-power state, which uses a slower clock rate and a lower supply voltage.

The general idea but no details for implementation of dynamic voltage and frequency scaling for video processing for reducing power usage is disclosed in "Context, Objectives, Use Cases and Requirements for Green MPEG" of the MOTION PICTURE EXPERT GROUP or ISO/IEC JTC1/SC29/; MPEG MEETING; 22-4-2013.

The following documents and standards descriptions are closely related to the present disclosure and may be referred to in an illustrative manner with respect to processes or apparatuses known to the skilled person: (i) Zhan Ma, Hao Hu, and Yao Wang, "On Complexity Modeling of H.264/AVC Video Decoding and Its Application for Energy Efficient Decoding", IEEE Trans. Multimedia, vol. 13, no. 6, pp. 1240-1255, December 2011 (hereinafter "REF1"); J. M. Rabaey. Digital Integrated Circuits. Prentice Hall, 1996 (hereinafter "REF2"); V. Sze, D. F. Finchelstein, M. E. Sinangil, A. P. Chandrakasan, "A 0.7-V 1.8-mW H.264/AVC 720p Video Decoder," IEEE Journal of Solid State Circuits (JSSC), A-SSCC Special Issue , Vol. 44, No. 11, pp. 2943-2956, November 2009 (hereinafter "REF3"); D. Son, C. Yu, and H. Kim, "Dynamic Voltage Scaling on MPEG Decoding", International Conference of Parallel and Distributed System (ICPADS), Jun. 2001 (hereinafter "REF4"); B. Lee, E. Nurvitadhi, R. Dixit, C. Yu, and M. Kim, "Dynamic Voltage Scaling Techniques for Power Efficient Video Decoding," Journal of Systems Architecture, Vol. 41, Issues 10-11, pp. 633-652, Nov. 2005 (hereinafter "REF5"); Z. Ma, M. Xu, Y.-F. Ou, and Y. Wang, "Modeling Rate and Perceptual Quality of Video as Functions of Quantization and Frame Rate and Its Applications," IEEE Trans. CSVT, Nov. 2011 (hereinafter "REF6"); and "Recommendation ITU-T H.264 or equivalently ISO/IEC 14496-10, Information technology -- Coding of audio-visual objects -- Part 10: Advanced Video Coding" (hereinafter "REF7"); and "Recommendation ITU-T H.265 or equivalently ISO/IEC 23008-2 MPEG-H Part 2 (hereinafter "REF 8").").

## SUMMARY OF THE INVENTION

A method for dynamic voltage/frequency scaling (DVFS) for video processing according to the appended claims is provided.

An apparatus for DVFS for video processing according to the appended claims is provided.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

## BRIEF DESCRIPTION OF THE DRAWINGS

For a more complete understanding of the present disclosure and its advantages, reference is now made to the following description taken in conjunction with the accompanying drawings, in which like reference numerals represent like parts:

FIGURE 1 illustrates an example video sequence, according to an embodiment of this disclosure;

FIGURE 2 illustrates a NALU (network abstraction layer unit) definition in H.264/AVC;

FIGURE 3 illustrates a syntax for a NALU header;

FIGURE 4 illustrates a simplified parsing, complexity prediction, and DVFS control process, according to an embodiment of this disclosure;

FIGURES 5 and 6 illustrate encapsulation of complexity metadata in a video sequence, according to embodiments of this disclosure;

FIGURE 7 illustrates MacroModel and MicroModel implementations of video complexity prediction, according to embodiments of this disclosure;

FIGURE 8 illustrates a system architecture for an encoder and a decoder, according to an embodiment of this disclosure;

FIGURE 9 illustrates a video stream at a decoder, according to an embodiment of this disclosure;

FIGURE 10 illustrates a Markov state machine of a video decoder process, according to an embodiment of this disclosure; and

FIGURE 11 illustrates variations of frequency and voltage among different scenes in a video, according to an embodiment of this disclosure.

## DETAILED DESCRIPTION

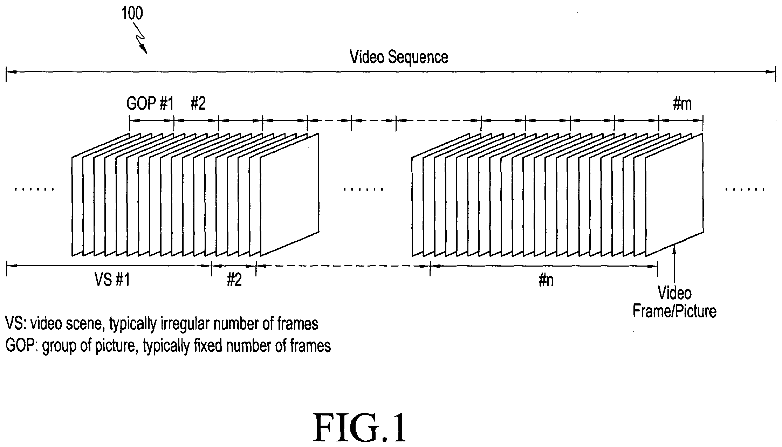

FIGURES 1 through 11, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged wireless communication system.

FIGURE 1 illustrates an example video sequence, according to an embodiment of this disclosure. The embodiment of the video sequence 100 illustrated in FIGURE 1 is for illustration only. Other embodiments could be used without departing from the scope of this disclosure.

A video sequence is a time serial representation of two-dimensional (2D) images (or frames or pictures). As shown in FIGURE 1, a basic unit for the video sequence 100 is the video frame (or picture). In addition, a group of pictures (GOP), represented by GOP #1 and GOP #2, is a commonly used unit which usually includes a fixed number of frames for encoding. Each video sequence may include multiple video scenes (VS). Each video scene contains video content that may be quite different from other video scenes. Each video scene typically includes a different number of frames.

Power consumption at a video decoder is proportional to CPU voltage and frequency, as shown in the following relationship:

$$P_{dyn} \propto V^2 f$$

Accordingly, recent advances in circuit design have demonstrated that power consumption can be reduced if circuits are placed into a low-power state, which uses a slower clock rate (or frequency) and a lower supply voltage. Such technology is generally referred as Dynamic voltage/frequency scaling (DVFS). (See also REF2.) DVFS can be implemented on both software implementation on CPU and hardware implementation on ASIC. (See also REF1 and REF3.)

Research also shows that there is a large complexity variation for video frame processing. For example, decoding of different types of frames may require significantly different clock rates. On some low-complexity frames, it may be possible to run the decoder CPU at a lower frequency to save power. Therefore, it is helpful to apply the DVFS with video processing so as to save computing energy during decoding. To control the DVFS, accurate video processing complexity estimation is highly important. Some systems have been described which implement the DVFS with MPEG video decoding. (See REF4 and REF5.) However, such systems require training, and the associated computing time is simply given in terms of the bitstream length. Such a relationship is rough and not accurate, especially for practical implementation.

None of the described systems use supplemental enhancement information (SEI) to guide the DVFS for video decoding. SEI comprises extra information that can be inserted into the bitstream to enhance the use of the video for a wide variety of purposes. Likewise, none of the described systems extend the NALU (network abstraction layer unit) header to guide the DVFS for video decoding. Such SEI and NALU header messages can be easily derived and encapsulated at the video encoder.

In this disclosure, various embodiments are described in which video content complexity information is embedded into the bitstream as metadata. In one embodiment, the video content information is embedded using SEI syntax. In another embodiment, the video content information is embedded using NALU header syntax. The SEI syntax or NALU syntax can be parsed at the decoder to support the complexity prediction so as to guide the DVFS for energy saving. The SEI or NALU header messages are derived at the encoder during video encoding.

Such SEI messages and NALU header information may be embedded in media systems embodiments to support DVFS for energy saving. Some embodiments described in this disclosure comprise a software-implemented H.264/AVC decoder on the CPU. However, the embodiments are not limited thereto, and can also be applicable to a hardware codec.

The DVFS-enabling SEI message or NALU header message (e.g., complexity_estimator()) can be inserted into the bitstream on a frame-by-frame, GOP-by-GOP, scene-by-scene, or even time-interval-by-time-interval basis, depending on the underlying applications. That is, the SEI message or NALU header message can be inserted once at the start of each frame, GOP, scene, or time interval. In comparison to a frame-level inserted message, a GOP-interval, scene-interval, or time-interval inserted message requires less overhead for message insertion. For processors that don't support high-frequency DVFS (e.g., adapting at 33 ms for 30Hz video playback), setting period_type to a GOP, or time-interval may be advantageous to setting the upcoming period to a frame.

In an embodiment where video content information is embedded using SEI syntax, a new SEI message with a payloadType = 54 is defined in H.264/AVC as shown in Table 1. It will be understood that the value 54 is just one example value. Any available number can be selected. The new SEI message is interpreted at the decoder. Each time the decoder parses the new SEI message, the decoder enables a frame-level, GOP-level, scene-level, or time interval-level complexity estimation, as defined in Table 2.1. As shown in Table 2, the complexity metrics include the number of non-zero macroblocks, the number of intra-coded macroblocks, the number of half-pel interpolations, and the number of alpha point de-blocking instances.

To determine the number of half-pel interpolations, note that each half-pel interpolation requires a 6-tap filtering operation, as defined in REF7. At the encoder, given the motion vector of each block, the number of 6-tap filtering operations (and hence the number of half-pel interpolations) is easily determined.

To determine the number of alpha point deblocking instances, the notation defined in REF7 is first used to define an alpha point deblocking instance as a single filtering operation that produces either a single, filtered output $p'_0$ or a single, filtered output $q'_0$ where $p'_0$ and $q'_0$ are filtered samples across a 4x4 block edge. Therefore the number of alpha point deblocking instances is the total number of filtering operations applied to produce filtered samples of the type $p'_0$ or $q'_0$.

In the embodiment shown in Table 2, period_type indicates the type of upcoming period over which the four complexity metrics are applicable. For period_type = 0, 1, 2, 3, the complexity metrics will be respectively applicable over a single frame, a single GOP, a specified time-interval (in seconds) or a specified number of frames. When the period_type is 2 or 3, then it can signal the duration of a scene over which the complexity metrics are applicable. When period_type is 2, num_seconds specifies the number of seconds over which the complexity metrics are applicable. When period_type is 3, num_frames specifies the number of frames over which the complexity metrics are applicable.

In the embodiment shown in Table 2.1, two bytes are used for each complexity metric when period_type is 0 or 1 and four bytes are used for each complexity metric when period_type is 2 or 3. This embodiment reduces signaling overhead for short-duration periods.

In the embodiment shown in Table 2.2, only two types of periods are signaled. When period_type is 0, the complexity metrics are applicable over a single GOP and when period_type is 1, the complexity metrics are applicable over a specified interval which is signaled in seconds and also in also in a specified number of frames. It will be understood that other combinations of the embodiments described above may also be used without departing from the scope of this disclosure. For example, the embodiment of Table 2.2 may be modified so that the complexity metrics are applicable over a single GOP, specified number of seconds or specified number of frames.

The SEI message containing the complexity metrics is transmitted at the start of an upcoming period. The next SEI message containing complexity metrics will be transmitted at the start of the next upcoming period. Therefore, when the upcoming period is a frame or GOP, SEI messages will be transmitted for each frame or GOP, respectively. When the upcoming period is a specified time interval , the associated SEI message is transmitted with the first frame in the interval. When the upcoming period is a specified number of frames, the associated SEI message is transmitted with the first frame. The same signaling protocol is applied when using extended NAL units.

In certain embodiments, each metric is stored in four bytes; thus the total overhead for all four metrics (4 metrics x 4 bytes = 16 bytes) is negligible. Once all four metrics are obtained, the decoder estimates the complexity for the next frame, GOP, scene, or time interval. This complexity estimation is then used to adjust the voltage and frequency for the upcoming period.

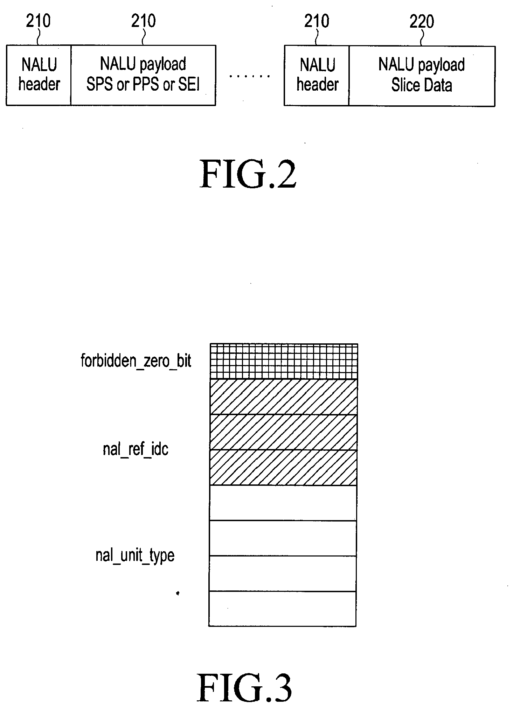

In another embodiment, the video content information is embedded using NALU header syntax. FIGURE 2 illustrates a NALU definition in H.264/AVC. As shown in FIGURE 2, a NALU 200 includes two parts, a NALU header 210 and a NALU payload 220. The NALU header 210 may be parsed at the decoder for decoding operations. For example, if the NALU header 210 indicates that the NALU 200 is a SPS (sequence parameter set) or a PPS (picture parameter set), then SPS or PPS parsing and initialization will be performed. Alternatively, if the NALU header 210 indicates that the NALU 200 is a slice NALU, then slice decoding is performed.

In H.264/AVC and its extensions, the NALU 200 is byte-aligned. The NALU header 210 may be either one (1) byte or four (4) bytes, depending on whether the NALU 200 is a regular single layer packet or a scalable packet. Table 3 shows the NALU syntax and its parsing process for H.264/AVC and its extensions.

Table 3 illustrates a syntax for a NALU header, such as the NALU header 210. As shown in Table 3, a normal 1-byte NALU header includes a one-bit forbidden_zero_bit field (which is always zero), a three-bit nal_ref_idc field indicating whether the NALU can be referred, and a five-bit nal_unit_type field showing the exact type of the following NALU payload. If the nal_unit_type field has a value between 14 and 20 inclusive, an extra three bytes are parsed to derive additional information associated with H.264 scalable video. As shown in Table 4, H.264/AVC defines various nal_unit_type values for appropriate parsing and decoding, where values from 24 to 31 are unspecified.

In accordance with the disclosed embodiment, a new nal_unit_type = 24 is defined in H.264/AVC, as shown in Table 5. It will be understood that the value 24 is just one example value. Any available number can be selected. The new nal_unit_type = 24 indicates the complexity associated information. When nal_unit_type = 24, complexity_estimator() is used to parse and initialize the decoding complexity prediction related data. Each time the decoder parses the NALU header, the decoder enables a frame-level, GOP-level, scene-level, or time interval-level complexity estimation, as defined in Table 5. As shown in Table 5, the complexity metrics include the number of non-zero macroblocks, the number of intra coded macroblocks, the number of half-pel interpolations, and the number of alpha point de-blocking instances. Once all four metrics in Table 2 are obtained, the decoder estimates the complexity for the next frame, GOP, or time interval as indicated by period_type. This complexity is then used to adjust the voltage and frequency for the upcoming period. Tables 5 and 6 illustrate the modification to extend the current NALU header definition to support complexity information embedding. Note that the extended NAL-unit embodiment shown in Table 5 corresponds to the SEI-message embodiment shown in Table 2. It is also possible to create NAL-unit embodiments that correspond to the SEI-message embodiments shown in Tables 2.1, 2.2, and permutations, combinations and modifications, thereof.

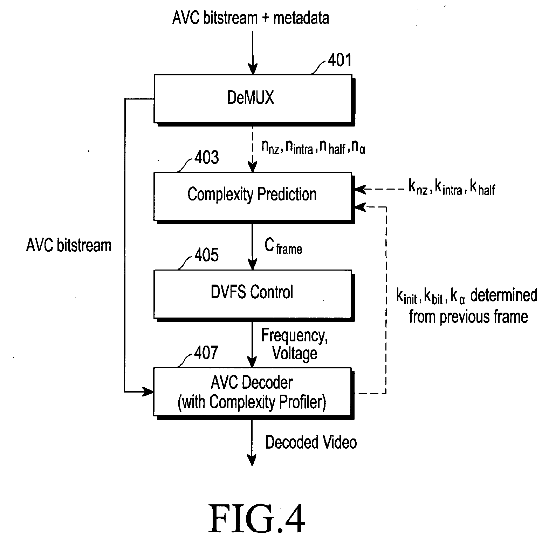

FIGURE 4 illustrates a simplified parsing, complexity prediction, and DVFS control process, according to an embodiment of this disclosure. The embodiment of the process 400 illustrated in FIGURE 4 is for illustration only. Other embodiments could be used without departing from the scope of this disclosure.

In operation 401, a decoder parses the packetized h.264/AVC bitstream. The parsing may include either SEI message parsing or NALU header parsing. Each time the SEI message or NALU header is encountered by the decoder, a new upcoming period begins. The value period_type indicates whether the new upcoming period is a single frame, a single GOP, or a time interval (specified in seconds or number of frames). Assuming that the upcoming period is a single frame, as shown in FIGURE 4, the SEI message or NALU header is parsed to derive the complexity parameters, such as num_non_zero_macroblockss ($n_{nz}$), the num_intra_coded_macroblocks ($n_{intra}$), the num_half_pel_interpolations ($n_{half}$), and num_alpha_point_deblocking ($n_\alpha$). Once the complexity parameters are derived, the total frame complexity is estimated or predicted according to Equation 1 (operation 403):

$$C_{frame} = k_{init}n_{MB} + k_{bit}n_{bit} + k_{nz}n_{nz} + k_{intra}n_{intra} + k_{half}n_{half} + k_\alpha n_\alpha$$

$$(1)$$

where $C_{frame}$ is the total frame complexity. The number of total macroblocks per frame ($n_{MB}$) and the number of bits per frame ($n_{bit}$) can be easily obtained after de-packetizing the encapsulated packets (for example, NAL units) and parsing the sequence parameter set. Constants $k_{init}$, $k_{bit}$, $k_{nz}$, $k_{intra}$, $k_{half}$, and $k_\alpha$ are unit complexity constants for performing macroblock initialization (including parsed data filling and prefetching), single-bit parsing, non-zero block transform and quantization, intra block prediction, inter-block half-pel interpolation, and deblocking alpha points filtering, respectively (see also REF1). Based on extensive simulations, it is recognized that $k_{nz}$, $k_{intra}$, and $k_{half}$ are fixed constants for a typical platform, while $k_{init}$, $k_{bit}$, and $k_\alpha$ can be accurately estimated using a linear predictor from a previous decoded frame.

Once the frame complexity is determined, the decoder applies DVFS to determine a suitable clock frequency and supply voltage for the decoder (operation 405). Then, in operation 407, the decoder can decode the video frame at the appropriate clock frequency and supply voltage.

While FIGURE 4 is illustrated with respect to determining a total frame complexity $C_{frame}$, various changes may be made to FIGURE 4. For example, analogous complexity estimations for a total GOP ($C_{GOP}$), scene ($C_{scene}$), or time interval ($C_{interval}$) can also be determined using Equation (1) and FIGURE 4.

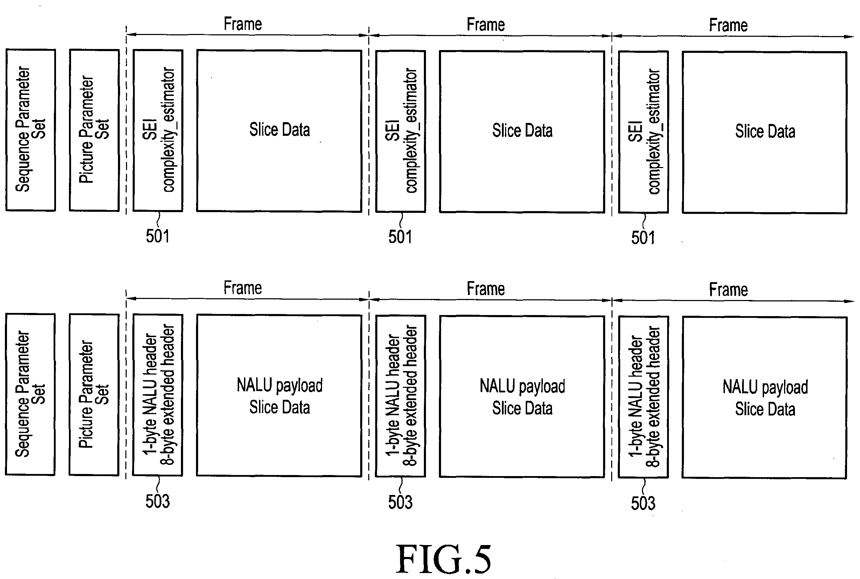

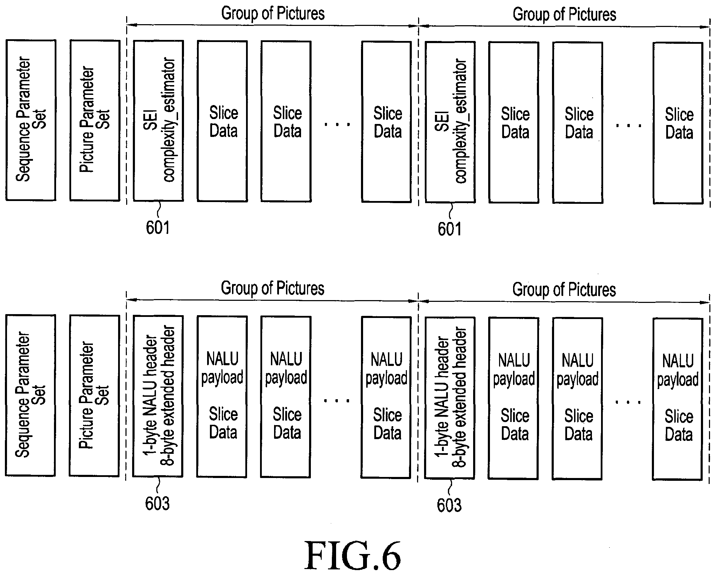

FIGURES 5 and 6 illustrate encapsulation of complexity metadata in a video sequence, according to embodiments of this disclosure. The embodiments illustrated in FIGURES 5 and 6 are for illustration only. Other embodiments could be used without departing from the scope of this disclosure.

As shown in FIGURE 5, the complexity metadata may be encapsulated in a SEI message 501 at the start of each frame. Alternatively, the complexity metadata may be encapsulated in a NALU header 503 at the start of each frame. In another embodiment, the complexity metadata may be included at the GOP level. For example, as shown in FIGURE 6, the complexity metadata may be encapsulated in a SEI message 601 at the start of each GOP. Alternatively, the complexity metadata may be encapsulated in a NALU header 603 at the start of each GOP.

Although FIGURES 5 and 6 depict certain examples of encapsulation of complexity metadata in a video sequence, various changes may be made to FIGURES 5 and 6. For example, the complexity metadata may be included at the start of every scene or predetermined time interval, instead of at the start of every frame or GOP. Likewise, the complexity metadata may be encapsulated at the end of, or in the middle of, every frame, GOP, scene, or time interval, instead of at the beginning.

In a hardware (ASIC) embodiment, instead of deriving decoding complexity and using it directly to control a single clock frequency in a DVFS scheme, the ASIC can be designed so that it includes several distinct clock domains, each of which corresponds to one of the terms in Equation (1). Greater power reduction can be obtained by using such a flexible ASIC with distinct clock domains. In one embodiment, six (6) clock domains in the ASIC control the following six (6) sections of the ASIC: macroblock initialization, bit parsing, transform and quantization, intra-block prediction, interpolation, and deblocking. To achieve fine-grained DVFS adjustments, the clock frequencies in each domain may be varied in proportion to the corresponding term in Equation (1). Accordingly, the preceding clock domains can have instantaneous clock frequencies that are respectively proportional to the following terms: $k_{init}n_{MB}$, $k_{bit}n_{bit}$, $k_{nz}n_{nz}$, $k_{intra}n_{intra}$, $k_{half}n_{half}$, and $k_{\alpha}n_{\alpha}$.

It will be understood that this method of DVFS control over several distinct clock domains may be applied to any grouping of metadata terms. Equation (1) is merely one example of such a grouping.

The embodiments disclosed hereinabove exemplify DVFS control in implementations using a SEI message or extended NALU header in the context of REF7. Without departing from the scope of this disclosure, it will be understood by one skilled in the art, that these embodiments may also be implemented in the context of REF8 or other similar standards. However, this disclosure is not limited thereto. In other embodiments, any information derived from the encoder can be embedded in a SEI message or extended NALU header to help the decoder DVFS. In still other embodiments, information can be derived by analyzing the underlying input video, such as motion activities, pixel histogram, contrasts, and the like.

Table 1

| SEI messages defined in H.264/AVC | | |
|---|---|---|
| sei_payload(payloadType, payloadSize ) { | **C** | **Descriptor** |
| if(payloadType == 0) | | |
| buffering_period(payloadSize) | 5 | |
| else if(payloadType == 1) | | |
| pic_timing(payloadSize) | 5 | |
| else if(payloadType == 2) | | |
| pan_scan_rect(payloadSize) | 5 | |
| else if(payloadType == 3) | | |
| filler_payload(payloadSize) | 5 | |
| else if(payloadType == 4) | | |
| user_data_registered_itu_ t_t35(payloadSize) | 5 | |
| else if(payloadType == 5) | | |
| user_data_unregistered(payloadSize ) | 5 | |
| else if(payloadType == 6) | | |
| recovery_point(payloadSize) | 5 | |
| else if(payloadType == 7) | | |
| dec_ ref_pic_marking_repetition(payloadSize) | 5 | |
| else if(payloadType == 8) | | |

| SEI messages defined in H.264/AVC | | |
|---|---|---|
| sei_payload(payloadType, payloadSize ) { | **C** | **Descriptor** |
| spare_pic(payloadSize) | 5 | |
| else if(payloadType == 9) | | |
| scene_info(payloadSize) | 5 | |
| else if(payloadType == 10) | | |
| sub_seq_info(payloadSize) | 5 | |
| else if(payloadType == 11) | | |
| sub_seq_layer_characteristics(payloadSize) | 5 | |
| else if(payloadType == 12) | | |
| sub_seq_characteristics(payloadSize) | 5 | |
| else if(payloadType == 13) | | |
| full_frame_freeze(payloadSize) | 5 | |
| else if(payloadType == 14) | | |
| full_frame_freeze_release(payloadSize) | 5 | |
| else if(payloadType == 15) | | |
| full_ frame_snapshot(payloadSize) | 5 | |
| else if(payloadType == 16) | | |
| progressive_refinement_segment_start(payloadSize) | 5 | |
| else if(payloadType == 17) | | |
| progressive_refinement_segment_end(payloadSize) | 5 | |
| else if(payloadType == 18) | | |
| motion_constrained_slice_group_set(payloadSize ) | 5 | |
| else if(payloadType == 19) | | |
| film_grain_characteristics(payloadSize) | 5 | |
| else if(payloadType == 20) | | |
| deblocking_filter_display_preference(payloadSize) | 5 | |
| else if(payloadType == 21) | | |
| stereo_ video_info(payloadSize) | 5 | |
| else if(payloadType == 22) | | |
| post_filter_hint(payloadSize) | 5 | |
| else if(payloadType == 23) | | |
| tone_mapping_info(payloadSize) | 5 | |
| else if(payloadType == 24) | | |
| scalability_info(payloadSize) /* specified in Annex G */ | 5 | |
| else if(payloadType == 25) | | |
| sub_pic_scalab_layer(payloadSize) /* specified in Annex G */ | 5 | |
| else if(payloadType == 26) | | |

(continued)

| SEI messages defined in H.264/AVC | | |
|---|---|---|
| sei_payload(payloadType, payloadSize ) { | **C** | **Descriptor** |
| non_required_layer_rep(payloadSize ) /* specified in Annex G */ | 5 | |
| else if(payloadType == 27) | | |
| priority_layer_info(payloadSize ) /* specified in Annex G */ | 5 | |
| else if(payloadType == 28) | | |
| layers_not_present(payloadSize ) /* specified in Annex G */ | 5 | |
| else if(payloadType == 29) | | |
| layer_dependency_change(payloadSize ) /* specified in Annex G */ | 5 | |
| else if(payloadType == 30) | | |
| scalable_nesting(payloadSize ) /* specified in Annex G */ | 5 | |
| else if(payloadType == 31) | | |
| base layer_temporal_hrd(payloadSize ) /* specified in Annex G */ | 5 | |
| else if(payloadType == 32) | | |
| quality_layer_integrity_check(payloadSize) /* specified in Annex G */ | 5 | |
| else if(payloadType == 33) | | |
| redundant_pic_property(payloadSize) /* specified in Annex G */ | 5 | |
| else if(payloadType == 34) | | |
| tl0_dep_rep_index(payloadSize ) /* specified in Annex G */ | 5 | |
| else if(payloadType == 35) | | |
| tl_switching_point(payloadSize) /* specified in Annex G */ | 5 | |
| else if(payloadType == 36) | | |
| parallel_decoding_info(payloadSize ) /* specified in Annex H */ | 5 | |
| else if(payloadType == 37) | | |
| mvc_scalable_nesting(payloadSize) /* specified in Annex H */ | 5 | |
| else if(payloadType == 38) | | |
| view_scalability_info(payloadSize ) /* specified in Annex H */ | 5 | |
| else if(payloadType == 39) | | |
| multiview_scene_info(payloadSize ) /* specified in Annex H */ | 5 | |

(continued)

| SEI messages defined in H.264/AVC | | |
|---|---|---|
| sei_payload(payloadType, payloadSize ) { | **C** | **Descriptor** |
| else if(payloadType == 40) | | |
| multiview_acquisition_info(payloadSize) /* specified in Annex H */ | 5 | |
| else if(payloadType == 41) | | |
| non_required_view_component(payloadSize) /* specified in Annex H */ | 5 | |
| else if(payloadType == 42) | | |
| view_dependency_change(payloadSize) /* specified in Annex H */ | 5 | |
| else if(payloadType == 43) | | |
| operation_points_not_present(payloadSize) /* specified in Annex H */ | 5 | |
| else if(payloadType == 44) | | |
| base_view_temporal_hrd(payloadSize) /* specified in Annex H */ | 5 | |
| else if(payloadType == 45) | | |
| frame_packing_arrangement (payloadSize ) | 5 | |
| else if(payloadType == 46) | | |
| multiview_view_position(payloadSize) /* specified in Annex H */ | 5 | |
| else if(payloadType == 47) | | |
| display_orientation(payloadSize) /* specified in Annex I */ | 5 | |
| else if(payloadType == 48) | | |
| mvcd_view_scalable_nesting(payloadSize) /* specified in Annex I */ | 5 | |
| else if(payloadType == 49) | | |
| mvcd_view_scalability_info_(payloadSize) /* specified in Annex I */ | 5 | |
| else if(payloadType == 50) | | |
| depth_representation_info(payloadSize) | 5 | |
| else if(payloadType == 51) | | |
| three_dimensional_reference_displays_info(payload Size) /* specified in Annex I */ | | |
| else if(payloadType == 52) | | |
| depth_timing(payloadSize) /* specified in Annex I */ | 5 | |
| else if(payloadType == 53) | | |
| depth_sampling_info(payloadSize) | 5 | |

(continued)

| SEI messages defined in H.264/AVC | | |
|---|---|---|
| sei_payload(payloadType, payloadSize ) { | **C** | **Descriptor** |
|     else if(payloadType == 54) | | |
|     complexity_estimator(payloadSize) /* specified for complexity estimation*/ | 5 | |
|     else | | |
|     reserved_sei_message(payloadSize) | 5 | |
|     if(!byte_aligned( )){ | | |
|         **bit_equal_to_one** /* equal to 1 */ | 5 | f(1) |
|         while(!byte_aligned( )) | | |
|         **bit_ equal_to_zero** /* equal to 0 */ | 5 | f(1) |
|     } | | |
| } | | |

Table 2

| Complexity Estimator SEI Syntax: Embodiment 1 | | |
|---|---|---|
| complexity_estimator(payloadSize ) { | **C** | **Descriptor** |
|     **period_type** | 5 | f(2) |
|     if(period_type == 2) { | | |
|     **num_seconds** | 5 | f(8) |
|     } | | |
|     if (period_type == 3) { | 5 | |
|     **num_frames** | 5 | f(12) |
|     } | | |
|     **num_non_zero_macroblocks** | 5 | f(32) |
|     **num_intra_coded_macroblocks** | 5 | f(32) |
|     **num_half_pel_interpolations** | 5 | f(32) |
|     **num_alpha_point_deblocking_instances** | 5 | f(32) |

Table 2.1

| Complexity Estimator SEI Syntax: Embodiment 2 | | |
|---|---|---|
| complexity_estimator(payloadSize) { | **C** | **Descriptor** |
| **period_type** | 5 | f(2) |
| if(period type == 2) { | | |
|     **num_seconds** | 5 | f(8) |
| } | | |
| if(period type == 3) { | 5 | |
|     **num_frames** | 5 | f(12) |

(continued)

| Complexity Estimator SEI Syntax: Embodiment 2 | | |
|---|---|---|
| complexity_estimator(payloadSize) { | **C** | **Descriptor** |
| } | | |
| if (period type < 2) { | | |
| num_non_zero_macroblocks | 5 | f(16) |
| num_intra_coded_macroblocks | 5 | f(16) |
| num_half_pel_interpolations | 5 | f(16) |
| num_alpha_point_deblocking_instances | 5 | f(16) |
| } | | |
| else { | | |
| num_non_zero_macroblocks | 5 | f(32) |
| num_intra_coded_macroblocks | 5 | f(32) |
| num_half_pel_interpolations | 5 | f(32) |
| num_alpha_ point_ deblocking_ instances | 5 | f(32) |
| } | | |

Table 2.2

| Complexity Estimator SEI Syntax: Embodiment 3 | | |
|---|---|---|
| complexity_estimator(payloadSize) { | **C** | **Descriptor** |
| **period type** | 5 | f(11) |
| if (period_typetype == 1) { | | |
| num_seconds | 5 | f(8) |
| num_frames | 5 | f(12) |
| } | | |
| if (period_type = 0) { | | |
| num_non_zero_macroblocks | 5 | f(16) |
| num_intra_coded_macroblocks | 5 | f(16) |
| num_half_pel_interpolations | 5 | f(16) |
| num_alpha_point_deblocking_instances | 5 | f(16) |
| } | | |
| else { | | |
| num_non_zero_macroblocks | 5 | f(32) |
| num_intra_coded_macroblocks | 5 | f(32) |
| num_half pel_interpolations | 5 | f(32) |
| num_alpha_point_deblocking_instances | 5 | f(32) |
| } | | |

Table 3

| NALU syntax in H.264/AVC and its extensions | | |
|---|---|---|
| nal_unit(NumBytesInNALunit) { | **C** | **Descriptor** |
| **Forbidden_zero_bit** | All | f(1) |
| **Nal_ref_ide** | All | u(2) |
| **nal_unit_type** | All | u(5) |
| NumBytesInRBSF = 0 | | |
| nalUnitHeaderBytes = 1 | | |
| if(nal_unit_type == 14\|\| nal_unit_type == 20 \|\|     nal_unit_type == 21) { | | |
|     **svc_extension_flag** | All | u(1) |
|     if(svc_extension_flag) | | |
|         nal_unit_header_svc_extension( ) /* specified in Annex G */ | All | |
|     else | | |
|         nal_unit_header_mvc_extension( ) /* specified in Annex H */ | All | |
|     nalUnitHeaderBytes += 3 | | |
| | | |
| for(i - nalUnitHeaderBytes; i < NumBytesInNALunit; i++ ) { | | |
|     if(i + 2 < NumBytesInNALunit && next_bits(24) == 0x000003) { | | |
|         **rbsp_byte** [NumBytesInRBSP++] | All | b(8) |
|         **rbsp_byte** [NumBytesInRBSP++ ] | All | b(8) |
|         i +=2 | | |
|         **emulation_prevention_three_byte** /* equal to 0x03 */ | All | f(8) |
|     } else | | |
|         **rbsp_byte** [NumBytesInRBSP++] ] | All | b(8) |

Table 4

| nal_unit_type definitions in H.264/AVC | | | | | |
|---|---|---|---|---|---|
| **nal_ unit_ type** | **Content of NAL unit and RBSP syntax structure** | **C** | **Annex A NAL unit type class** | **Annex G And Annex H NAL unit type class** | **Annex I NAL unit type class** |
| 0 | Unspecified | | non-VCL | non-VCL | non-VCL |
| 1 | Coded slice of a non-IDR slice_layer_without_ partittoning_rbsp( ) | 2,3,4 | VCL | VCL | VCL |
| 2 | Coded slice data partition A slice_data_partition_a_ layer_rbsp( ) | 2 | VCL | not applicable | not applicable |

(continued)

| nal_unit_type definitions in H.264/AVC | | | | | |
|---|---|---|---|---|---|
| nal_unit_type | Content of NAL unit and RBSP syntax structure | C | Annex A NAL unit type class | Annex G And Annex H NAL unit type class | Annex I NAL unit type class |
| 3 | Coded slice data partition B slice_data_partition_b_layer_rbsp( ) | 3 | VCL | not applicable | not applicable |
| 4 | Coded slice data partition C slice_data_partition_c_layer_rbsp( ) | 4 | VCL | not applicable | not applicable |
| 5 | Coded slice of an IDR picture slice_layer_without_partitioning_rbsp( ) | 2,3 | VCL | VCL | VCL |
| 6 | Supplemental enhancement information (SEI) sei_rbsp( ) | 5 | non-VCL | non-VCL | non-VCL |
| 7 | Sequence parameter set seq_parameter_set rbsp( ) | 0 | non-VCL | non-VCL | non-VCL |
| 8 | Picture parameter set Pic parameter set rbsp( ) | 1 | non-VCL | non-VCL | non-VCL |
| 9 | Access unit delimiter access_unit_delimiter_rbs p ( ) | 6 | non-VCL | non-VCL | non-VCL |
| 10 | End of sequence end_of_seq_rbsp( ) | 7 | non-VCL | non-VCL | non-VCL |
| 11 | End of stream end_of_stream_rbsp( ) | 8 | non-VCL | non-VCL | non-VCL |
| 12 | Filler data filler data rbsp( ) | 9 | non-VCL | non-VCL | non-VCL |
| 13 | Sequence parameter set extension Seq_parameter_set_extension_rbsp( ) | 10 | non-VCL | non-VCL | non-VCL |
| 14 | Prefix NAL unit prefix_nal_unit_rbsp( ) | 2 | non-VCL | suffix dependent | suffix dependent |
| 15 | Subset sequence parameter set subserseqparameter_set_rbsp( ) | 0 | non-VCL | non-VCL | non-VCL |
| 16..18 | Reserved | | non-VCL | non-VCL | non-VCL |
| 19 | Coded slice of an auxiliary coded picture without partitioning slice_layer_without_partitioning_rbsp( ) | 2,3,4 | non-VCL | non-VCL | non-VCL |

(continued)

| nal_unit_type definitions in H.264/AVC | | | | | |
|---|---|---|---|---|---|
| nal_ unit_ type | Content of NAL unit and RBSP syntax structure | C | Annex A NAL unit type class | Annex G And Annex H NAL unit type class | Annex I NAL unit type class |
| 20 | Coded slice extension slice_layer_extension_rbs p ( ) | 2,3,4 | n-VCL no | VCL | VCL |
| 21 | Coded slice extension for depth View components /* specified in Annex I */ slice_layer_extension_rbs p ( ) /* specified in Annex I */ | 2,3,4 | non-VCL | non-VCL | VCL |
| 22..23 | Reserved | | non-VCL | non-VCL | VCL |
| 24..31 | Unspecified | | non-VCL | non-VCL | non-VCL |

Table 5

| Extended NAL unit syntax | | |
|---|---|---|
| nal_unit(NumBytesInNALunit) { | C | Descriptor |
| **forbidden_zero_bit** | All | f(1) |
| **nal_ref_idc** | All | u(2) |
| **nal_unit_type** | All | u(5) |
| NumBytesInRBSP = 0 | | |
| nalUnitHeaderBytes = 1 | | |
| if(nal_unit_type == 14 || nal_unit_type == 20) { | | |
| **svc_extension_flag** | All | u(1) |
| if(svc_extension_flag) | | |
| nal_unit_header_svc_extension( ) /* specified in Annex G */ | All | |
| Else | | |
| nal_unit_header_mvc_extension( ) /* specified in Annex H */ | All | |
| nalUnitHeaderBytes += 3 | | |
| } | | |
| if (nal_unit_type == 24 ){ | | |
| **period_type** | All | u(2) |
| if(period_type = 2) { | | |
| **num_seconds** | All | f(8) |
| } | | |
| if (period_type == 3) { | All | |
| **num_frames** | All | f(12) |
| **}** | | |

(continued)

| Extended NAL unit syntax | | |
|---|---|---|
| nal_unit(NumBytesInNALunit) { | **C** | **Descriptor** |
| if (period type < 2 ) { | | |
| **num_non_zero_macroblocks** | All | f(16) |
| **num_intra_coded_macroblocks** | All | f(16) |
| **num_half_pel_interpolations** | All | f(16) |
| **num_alpha_point_deblocking_instances** | All | f(16) |
| **}** | | |
| **else {** | | |
| **num_non_zero_macroblocks** | All | f(32) |
| **num_intra_coded_macroblocks** | All | f(32) |
| **num_half_pel_interpolations** | All | f(32) |
| **num_alpha_point_deblocking_instances** | All | f(32) |
| } | | |
| for(i = nalUnitHeaderBytes; i < NumBytesInNALunit; i++) { | | |
| if(i + 2 < NumBytesInNALunit && next_bits(24) == 0x000003) { | | |
| **rbsp_byte[NumBytesInRBSP++]** | All | b(8) |
| **rbsp_byte[NumBytesInRBSP++]** | All | b(8) |
| i +=2 | | |
| **emulation_prevention_three_byte** /* equal to 0x03 */ | All | f(8) |
| } else | | |
| **rbsp_byte[** NumBytesInRBSP++] | All | b(8) |
| } | | |
| } | | |

Table 6

| Extended NAL unit type definition | | | | |
|---|---|---|---|---|
| **nal_ unit_ type** | **Content of NAL unit and RBSP syntax structure** | **C** | **Annex A NAL unit type class** | **Annex G and Annex H NAL unit type class** |
| 0 | Unspecified | | non-VCL | non-VCL |
| 1 | Coded slice of anon-IDR picture slice_layer_ without_partitioning_rbsp( ) | 2, 3, 4 | VCL | VCL |
| 2 | Coded slice data partition A slice_data_ partition_a_layer_rbsp( ) | 2 | VCL | not applicable |
| 3 | Coded slice data partition B slice_data_ partition_b_layer_rbsp( ) | 3 | VCL | not applicable |
| 4 | Coded slice data partition C slice_data_ partition_c_layer_rbsp( ) | 4 | VCL | not applicable |
| 5 | Coded slice of an IDR picture slice_layer_ without_partitioning_rbsp( ) | 2, 3 | VCL | VCL |

(continued)

| nal_unit_type | Content of NAL unit and RBSP syntax structure | C | Annex A NAL unit type class | Annex G and Annex H NAL unit type class |
|---|---|---|---|---|
| Extended NAL unit type definition | | | | |
| 6 | Supplemental enhancement information (SEI) sei_rbsp( ) | 5 | non-VCL | non-VCL |
| 7 | Sequence parameter set seq_parameter_set_rbsp( ) | 0 | non-VCL | non-VCL |
| 8 | Picture parameter set pic_parameter_set_rbsp ( ) | 1 | non-VCL | non-VCL |
| 9 | Access unit delimiter access_unit_delimiter_rbsp( ) | 6 | non-VCL | non-VCL |
| 10 | End of sequence end_of_seq_rbsp( ) | 7 | non-VCL | non-VCL |
| 11 | End of stream end_of_stream_rbsp( ) | 8 | non-VCL | non-VCL |
| 12 | Filler data filler_data_rbsp( ) | 9 | non-VCL | non-VCL |
| 13 | Sequence parameter set extension seq_parameter_set_extension_rbsp( ) | 10 | non-VCL | non-VCL |
| 14 | Prefix NAL unit prefix_nal_unit_rbsp( ) | 2 | non-VCL | suffix dependent |
| 15 | Subset sequence parameter set subset_seq_parameter_set_rbsp( ) | 0 | non-VCL | non-VCL |
| 16..18 | Reserved | | non-VCL | non-VCL |
| 19 | Coded slice of an auxiliary coded picture without partitioning slice_layer_without_partitioning_rbsp( ) | 2, 3, 4 | non-VCL | non-VCL |
| 20 | Coded slice extension slice_layer_extension_rbsp( ) | 2, 3, 4 | non-VCL | VCL |
| 21..23 | Reserved | | non-VCL | non-VCL |
| 24 | Complexity Estimation complexity_estimator( ) | | non-VCL | non-VCL |
| 25..31 | Unspecified | | non-VCL | non-VCL |

**DVFS-assisted Video Processing Using Complexity Model**

Some operation systems (GNU/LINUX, ANDROID, and the like) provide DVFS functionality based on past workload sampling. These are typically generalized DVFS schemes, which do not carry the video content information. Hence, such DVFS schemes cannot adapt the voltage or frequency accurately for video processing. Accurate video complexity estimation based DVFS is required to guide the efficient voltage/frequency adaptation for energy saving.

As discussed hereinabove, video decoding frame complexity can be well-captured by embedding appropriate metadata (e.g., the number of non-zero macroblocks, the number of intra macroblocks, the number of half-interpolations, the number of alpha-point deblocking instances, and the like) for a fixed H.264/AVC software implementation. It is also desirable to have a generalized complexity prediction using metadata for all popular standard compliant video decoders, such as MPEG-2, H.264/AVC, as well as the emerging HEVC (high efficiency video coding), on either a software platform or a hardware platform.

Various examples below describe video complexity prediction models for DVFS. In the disclosed examples, model associated parameters are encapsulated (at the encoder or transmitter) as metadata in the video bitstream. The metadata is later parsed at the decoder (or receiver) to guide the DVFS.

There are two models described herein. The first model, denoted as MacroModel, is applicable to sequence-level and scene-level implementations. The second model, denoted as MicroModel, is usually applied in frame-level or GOP-level implementations, but may be applied in scene-level implementations as well.

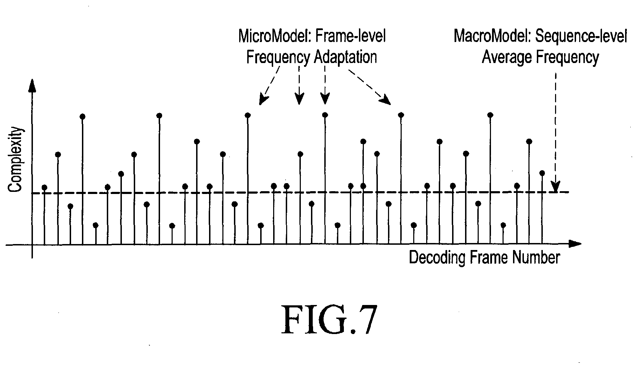

FIGURE 7 illustrates both MacroModel and MicroModel implementations, according to examples of this disclosure. The examples illustrated in FIGURE 7 are for illustration only. Other examples could be used without departing from the scope of this disclosure.

As shown in FIGURE 7, at the receiver, the MacroModel first determines the average frequency or voltage for an incoming video sequence. This frequency or voltage is the initial value for the MicroModel based frame adaptation. MacroModel and MicroModel can be applied either jointly or separately. The MacroModel and MicroModel implementations will now be described in greater detail.

MacroModel

A compressed video signal can be characterized as a function of its frame size s, frame rate t, and quantization q (for example, bit rate and perceptual video quality). (See also REF6.) Hypothetically, video processing complexity can be expressed as a function of s, t, and q as well. Intuitively, 1080p video at 60 frames per second (fps) requires more cycles to process than 720p, or even 480p video at 30 fps, Also, a higher bit rate stream (coded with smaller quantization) use more cycles to decode than a lower bit rate video stream. Accordingly, the video processing complexity model may be expressed as;

$$C(s,t,q) = C_{\max}\left(\frac{s}{s_{\max}}\right)^{c}\left(\frac{t}{t_{\max}}\right)^{a}\left(\frac{q}{q_{\min}}\right)^{-b} \quad (2)$$

where $q_{\min}$, $S_{\max}$ and $t_{\max}$ are chosen according to the underlying application, $C_{\max}$ is the actual number of cycles associated with decoding a video at $q_{\min}$, $s_{\max}$ and $t_{\max}$, and a, b and c are the model parameters.

Here, a, b, c and $C_{\max}$ are content dependent parameters that are calculated using features of the video stream. Let P = $[a, b, c, C_{\max}]^{T}$, and F = $[u_{MVM}, std_{MVM}, U_{MVD}, std_{MVD}, Sc, 1]^{T}$, where $u_{MVM}$ is the mean of the motion vector magnitude, $std_{MVM}$ is the standard deviation of the motion vector magnitude, $u_{MVD}$ is the mean of the motion vector direction, $std_{MVD}$ is the standard deviation of the motion vector direction, and Sc is the mean of content contrast. Then the following equation may be used to predict the model parameters:

$$P = HF, \quad (3)$$

where H is a weighting matrix which is fixed for typical coding structure (such as IPPP or IBBP) over different videos, $u_{MVM}$ is the mean of the motion vector magnitude, $std_{MVM}$ is the standard deviation of the motion vector magnitude, $u_{MVD}$ is mean of the motion vector direction, $std_{MVD}$ is the standard deviation of the motion vector direction and Sc is the mean of the content contrast. All these features are extracted from the original video at the encoder and embedded as the sequence-level metadata at the transmitter. Metadata F is parsed at the receiver to derive the MacroModel parameter using Equation (3). Then the average complexity for this video sequence is calculated using Equation (2).

In an example, the weighting matrix H is derived through training and then implemented at the receiver without change. In another example, a reasonable value of H is selected as a default, then the value is refined after decoding several test videos.

MicroModel

Bitstream decoding typically includes several or all of the following: bit parsing, buffer initialization, intra prediction (if applicable), inverse quantization & transform, reference block fetch, fractional reference block interpolation (if applicable), in-loop deblocking (if applicable), sample adaptive offset (if applicable), and adaptive loop filtering (if applicable).

Therefore, the total segment complexity can be generally represented by:

$$C_{total} = C_{bit\_parsing} + C_{buf\_init} + C_{itrans} + C_{intra} + C_{intp} + \\ C_{ref\_fetch} + C_{dblk} + C_{sao} + C_{alf} + C_{drf}. \quad (4)$$

For each module, its complexity is proportional to the number of its unit operation (OP). More specifically, the complexity of the bit parsing is a linear function of the number of bits $n_{bit}$. The complexity of the buffer initialization is linearly related to the block numbers $n_{total}$ (4x4, or 8x8). The transform complexity is proportional to the non-zero blocks

($n_{total}$-$n_{zero}$). The complexity of the intra prediction is linearly related to the intra block number $n_{intra}$. The complexity of the interpolation is linearly related to the number of the interpolations required $n_{intp}$. The reference block fetch complexity is proportional to the image size or the total block number $n_{total}$. Both the deblocking and sample adaptive offset complexities depend on the number of pixels which require the filtering operations (i.e., $n_{dblk}$ and $n_{sao}$). The adaptive loop filter and de-ringing filter complexities are proportional to the number of blocks which require the filtering (i.e., $n_{alf}$ and $n_{drf}$). Hence, we can have:

$$C_{bit\_parsing} = k_{bit}n_{bit}, \qquad 5)$$

$$C_{buf\_init} = k_{buf\_init}n_{total} \qquad 6)$$

$$C_{itrans} = k_{itrans}(n_{total}\text{-}n_{zero}) \qquad 7)$$

$$C_{intra} = k_{intra}n_{intra} \qquad 8)$$

$$C_{intp} = k_{intp}n_{intp} \qquad 9)$$

$$C_{ref\_fetch} = k_{ref\_fetch}n_{total} \qquad 10)$$

$$C_{dblk} = k_{dblk}n_{dblk} \qquad 11)$$

$$C_{sao} = k_{sao}n_{sao} \qquad 12)$$

$$C_{alf} = k_{alf}n_{alf} \qquad 13)$$

$$C_{drf,} = k_{drf}n_{drf} \qquad 14)$$

where $n_{zero}$, $n_{intra}$, $n_{intp}$, $n_{dblk}$, $n_{sao}$, $n_{alf}$, and $n_{drf}$ can be derived from the encoding process and used to compute the various complexity metrics for the segment; $n_{bit}$ is known from the length of the bitstream segment which can be easily obtained; and $n_{total}$ can be derived using the image resolution and basic block size used in the standards. Correspondingly, $k_{bit}$, $k_{buf\_init}$, $k_{itrans}$ $k_{intra}$, $k_{intp}$, $k_{ref\_fetch}$, $k_{dblk}$, $k_{sao}$, $k_{alf}$, and $k_{drf}$ are unit operation complexity constants. These constants may be different for different implementations, and may be zero if the corresponding module is not supported by a certain standard (for example $k_{sao}$, $k_{alf}$, $k_{drf}$ are all zero for H.264/AVC standards). To enable accurate segment complexity computation, these unit operation complexity constants can be assigned with predetermined default values in the beginning, and then refined by decoding sample streams or using historical data for the same implementation.

Metadata Encapsulation

In an example, MacroModel parameters associated with content features are embedded at the sequence level, such as the sequence parameter set (SPS), the video parameter set (VPS), supplemental enhancement information (SEI) messages, or the extension of the NALU (network abstraction layer unit).

In an example, the MicroModel parameters are embedded into SEI or the extension of the NALU. As an example, the video content information is embedded using NALU header syntax. The NALU header syntax can be parsed at the decoder to support the complexity prediction so as to guide the DVFS for energy saving. These header messages are derived at the encoder during video encoding. The examples described herein comprise a software-implemented H.264/AVC decoder on the CPU. However, the examples are not limited thereto, and can also be applicable to a hardware codec.

NALU Extension

The DVFS enabling NALU header message (i.e., complexity_estimator()) can be inserted into the bitstream on a frame-by-frame, GOP-by-GOP, scene-by-scene, or time-interval-by-time-interval basis, depending on the underlying applications. That is, the NALU header message can be inserted once at the start of each frame, GOP, scene, or time interval. In comparison to a frame-level inserted message, a GOP-interval, scene-interval, or time-interval inserted message requires less overhead for message insertion. For processors that don't support high-frequency DVFS (e.g., adapting at 33 ms for 30Hz video playback), a GOP-interval, scene-interval, or time-interval based scheme may be advantageous to a frame-based scheme.

NALU definition and illustration were described above in FIGURE 2. As shown in FIGURE 2, a NALU 200 includes two parts, a NALU header 210 and a NALU payload 220. The NALU header 210 may be parsed at the decoder for decoding operations. For example, if the NALU header 210 indicates that the NALU 200 is a SPS (sequence parameter set) or a PPS (picture parameter set), then SPS or PPS parsing and initialization will be performed. Alternatively, if the NALU header 210 indicates that the NALU 200 is a slice NALU, then slice decoding is performed.

In H.264/AVC and its extensions, the NALU 200 is byte-aligned. The NALU header 210 may be either one (1) byte or four (4) bytes, depending on whether the NALU 200 is a regular single layer packet or a scalable packet. Table 3 shows the NALU syntax and its parsing process for H.264/AVC and its extensions.

As described in FIGURE 3 above, a normal 1-byte NALU header includes a one-bit forbidden_zero_bit field (which is always zero), a three-bit nal_ref_idc field indicating whether the NALU can be referred, and a five-bit nal_unit_type field showing the exact type of the following NALU payload. If the nal_unit_type field has a value between 14 and 20 inclusive, an extra three bytes are parsed to derive additional information associated with H.264 scalable video. As shown in Table 4, H.264/AVC defines various nal_unit_type values for appropriate parsing and decoding, where values from 24 to 31 are unspecified.

In an example, a new nal_unit_type = 24 is defined as shown in Table 7. It will be understood that the value 24 is just one example value. Any available number can be selected. The new nal_unit_type in Table 7 is similar to the new nal_unit_type definition shown in Table 5; however, the nal_unit_type in Table 7 can support HEVC decoders. The new nal_unit_type = 24 indicates the complexity associated information. When nal_unit_type = 24, complexity_estimator() is used to parse and initialize the decoding complexity prediction related data. Each time the decoder parses the NALU header, the decoder enables a frame-level, GOP-level, scene-level, or time interval-level complexity estimation. The complexity metrics include the number of non-zero macroblocks, the number of intra coded macroblocks, the number of half-pel motion vectors, and the number of alpha point de-blocking instances, the number of sample adaptive offsets for HEVC, the number of adaptive loop filters for HEVC, and the number of dering filters for HEVC. Once all seven metrics in Table 7 are obtained, the decoder estimates the complexity for the next frame, GOP, scene, or time interval. This complexity is then used to adjust the voltage and frequency for the upcoming period. Table 7 and Table 6 (shown above) illustrate the modification to extend the current NALU header definition to support complexity information embedding in a wide variety of decoders, including HEVC decoders.

FIGURE 4 illustrates the simplified parsing, complexity prediction, and DVFS control process for the NALU header message, while FIGURES 5 and 6 illustrate the frame-level and GOP-level NALU header encapsulation, respectively.

SEI Message

The video content information can also be embedded using SEI message syntax. The SEI message syntax can be parsed at the decoder to support the complexity prediction so as to guide the DVFS for energy saving. The SEI messages are derived at the encoder during video encoding.

The DVFS-enabling SEI message (e.g., complexity_estimator()) can be inserted into the bitstream on a frame-by-frame, GOP-by-GOP, scene-by-scene, or even time-interval-by-time-interval basis, depending on the underlying applications. In comparison to a frame-level SEI message, a GOP-level, scene-level, or time-interval inserted message requires less overhead for message insertion. For processors that don't support high-frequency DVFS (e.g., adapting at 33 ms for 30Hz video playback), a GOP-interval, scene-interval, or time-interval based scheme may be advantageous to a frame-based scheme.

In an example, a new SEI message with payloadType = 46 is defined as shown in Table 1 above. It will be understood that the value 46 is just one example. Any available number can be selected. Each time the decoder parses the SEI message, the decoder enables the frame-level, GOP-level, scene-level, or time-interval-level complexity estimation as defined in Table 8. Once we obtain all information, we can estimate the complexity for next coming frame, GOP (group of picture), scene, and time interval, and this complexity is used to adjust the voltage and frequency for upcoming period.

FIGURE 4 illustrates the simplified parsing, complexity prediction, and DVFS control process for the SEI message, while FIGURES 5 and 6 illustrate the frame-level and GOP-level SEI message encapsulation, respectively.

Table 7

| Extended NAL unit syntax | | |
|---|---|---|
| nal_unit(NumBytesInNALunit) { | **C** | **Descriptor** |
| **forbidden_zero_bit** | All | f(1) |
| **nal_ref_idc** | All | u(2) |
| **nal_unit_type** | All | u(5) |
| NumBytesInRBSP = 0 | | |
| nalUnitHeaderBytes = 1 | | |
| if(nal_unit_type == 14 \|\| nal_unit_type == 20) { | | |
| **svc_extension_flag** | All | u(1) |
| if(svc_extension_flag)) | | |
| nal_unit_header_svc_extension( ) /* specified in Annex G */ | All | |
| else | | |
| nal_unit_header_mvc_extension( ) /* specified in Annex H */ | All | |
| nalUnitHeaderBytes += 3 | | |
| } | | |
| if (nal_unit_type == 24){ | | |
| **num_non_zero_macroblocks** | | u(16) |
| **num_intra_coded_macroblocks** | | u(16) |
| **num_half_pel_interpolations** | | u(16) |
| **num_alpha_point_deblocking_instances** | | u(16) |
| **num_sample_adaptive_offset /*for HEVC*/** | | u(16) |
| **num_adaptive_loopfilter /*for HEVC. extension*/** | | u(16) |
| **numdering_filter /*for HEVC extension*/** | | u(16) |
| } | | |
| for(i = nalUnitHeaderBytes; i < NumBytesInNALunit; i++){ | | |
| if(i + 2 < NumBytesInNALunit && next_bits(24) 0x000003) { | | |
| **rbsp_byte**[NumBytesInRBSP++] | All | b(8) |
| **rbsp_byte**[NumBytesInRBSP++] | All | b(8) |
| i+=2 | | |

(continued)

| Extended NAL unit syntax | | |
|---|---|---|
| nal_unit(NumBytesInNALunit) { | **C** | **Descriptor** |
| **emulation_prevention_three_byte** /* equal to 0x03 */ | All | f(8) |
| } else | | |
| **rbsp_byte**[NumBytesInRBSP++] | All | b(8) |
| } | | |
| } | | |

Table 8

| Complexity Estimator SEI Syntax | | |
|---|---|---|
| complexity estimator(payloadSize) { | **C** | **Descriptor** |
| **num_non_zero_macroblocks** | 5 | f(16) |
| num_intra_coded_macroblocks | 5 | f(16) |
| num_half_pel_interpolations | 5 | f(16) |
| num_alpha_point_deblocking_instances | 5 | f(16) |
| **num_sample_adaptive_offset/*for HEVC*/** | 5 | f(16) |
| **num_adaptive_loopfilter /*for HEVC extension*/** | 5 | f(16) |
| **num_derin_filter /*for HEVC extension*/** | 5 | f(16) |

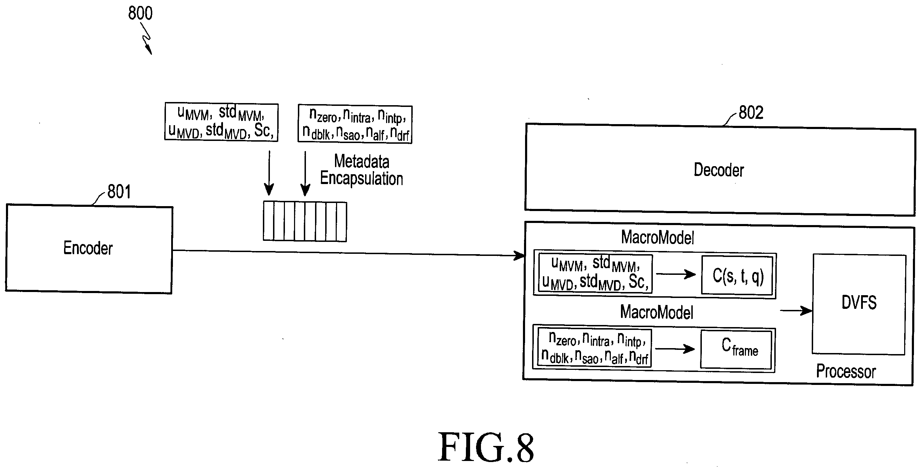

FIGURE 8 illustrates a system architecture for an encoder and a decoder, according to an example of this disclosure. The example of the system architecture 800 illustrated in FIGURE 8 is for illustration only. Other examples could be used without departing from the scope of this disclosure.

As used herein, the encoder 801 may be part of the transmitter and the decoder 802 may be part of the receiver. At the encoder 801, video content features are derived and embedded at the sequence level, which are then parsed at the decoder 802 to obtain the sequence level averaged complexity requirement. Encoding information, such as $n_{zero}$, $n_{intra}$, $n_{intp}$, $n_{dblk}$, $n_{sao}$, $n_{alf}$, and $n_{drf}$ are obtained during the encoding process and embedded appropriately in the bitstream for frame-level or GOP-level DVFS at the decoder 802. It is noted that MacroModel and MicroModel can be applied either jointly or separately.

The examples disclosed herein exemplify MicroModel-based DVFS using an extended NALU header or SEI message. However, this disclosure is not limited thereto. In other examples, any information derived from the encoder can be embedded in a SEI message or extended NALU header to help the decoder DVFS. In still other examples, information can be derived by analyzing the underlying input video, such as motion activities, pixel histogram, contrasts, and the like.

**Buffer Assisted DVFS**

As discussed hereinabove, video decoding frame complexity can be well-captured by embedding appropriate metadata for complexity prediction and DVFS control frame-by-frame. However, current systems do not use a buffer to help the DVFS so as to achieve additional energy savings. Various examples of this disclosure describe use of a buffer to assist the DVFS for video decoding.

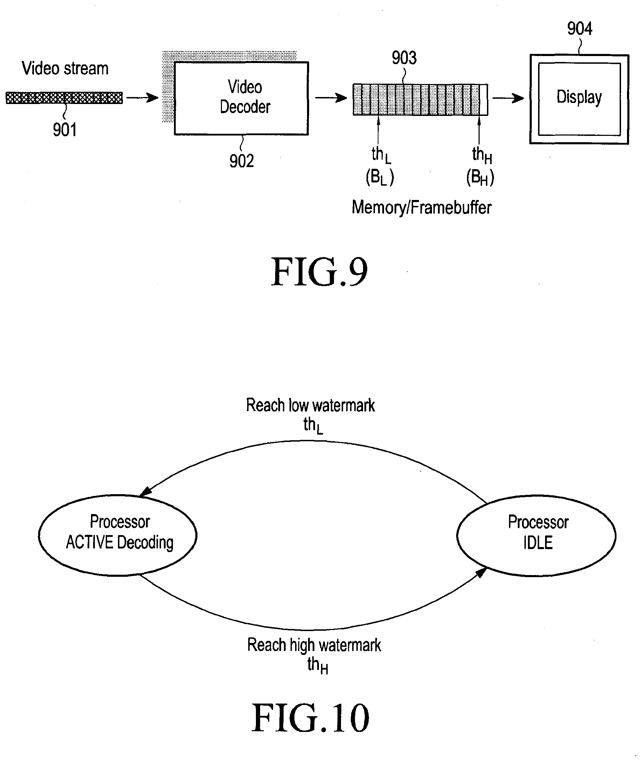

FIGURE 9 illustrates a video stream at a receiver, according to an example of this disclosure. The example illustrated in FIGURE 9 is for illustration only. Other examples could be used without departing from the scope of this disclosure.

As shown in FIGURE 9, a video stream 901 is decoded at a video decoder 902 (the decoder 902 may include either a software implementation using the CPU or a hardware implementation using a dedicated ASIC). Reconstructed frames are piped or loaded into a memory or frame buffer 903 and rendered at a display screen 904 of the receiver.

Let $th_L$ and $th_H$ denote the low watermark and high watermark for the frame buffer 903, which corresponds to

$B_L$ and $B_H$ bytes of data (i.e., frames) in memory. The number of frames can be derived using:

$$N = \frac{B}{a \cdot w \cdot h} \qquad (15)$$

where B stands for the size of occupied memory in the buffer 903 (where B is targeted to be somewhere between $B_L$ and $B_H$), w and h are the width and height of the decoded video, and a is the video color format scaling factor (for many videos, a = 1.5 for YUV420 format).

Initially, a delay may occur to fill the buffer to $th_H$. In some applications, this delay may be a couple of seconds. In many video streaming applications, there may already exist a delay of more than 10 seconds for one or more advertisements, thus a couple of seconds delay is reasonable. Let $t_{init}$ represent this short initial delay time. Accordingly, the clock rate should be set according to the following:

$$f_{init} = \frac{N_H \cdot C_{ave}}{t_{init}} \qquad (16)$$

where $N_H$ is the total number of frames, and $C_{ave}$ is the average cycles requirements (or complexity) for decoding the $N_H$ frames. $C_{ave}$ can be easily estimated using the method proposed in REF1, or can be predicted using polynomial functions based on the stream bytes, where the polynomial coefficients are trained using history data, or can be accurately approximated using the cycle data derived at the encoder and embedded in the stream as metadata, as discussed above.

Once the frame buffer 903 reaches the high watermark level $th_H$, the decoding processor 902 transitions to the idle state for sleep. During the decoder idle period, the display 904 continuously reads the data from the frame buffer 903 and controls the display panel for picture rendering. The decoding processor 902 transitions back to the active state once the buffer 903 gets to the low watermark $th_L$. The decoder 902 then decodes more video and makes the buffer 903 filled to $th_H$ again before buffer underflow. Before decoding more video, the clock rate of the decoder is assigned as:

$$f = \frac{N_H \cdot C_{ave}}{t_L}, t_L = \frac{B_L}{a \cdot w \cdot h} \qquad (17)$$

where $B_L$ represents the occupied memory size at the low watermark $th_L$. $C_{ave}$ is updated for the following streams for decoding. The same procedure is iterated until the whole stream is completed. Therefore, the overall system can be depicted using a Markov state machine depending on the buffer status, as shown in FIGURE 10.

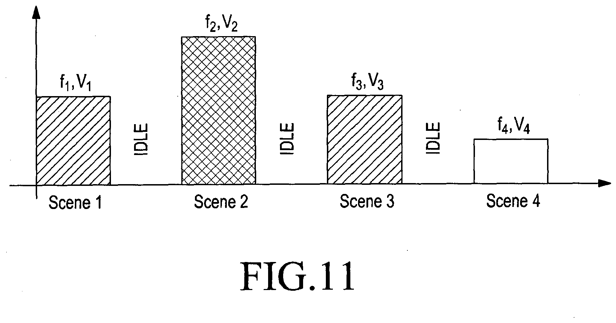

Because there may be large variations in content among different video scenes, $C_{ave}$ may be very different for different scenes; this in turn may result in a different clock rate f and associated supply voltage V for each scene. For example, FIGURE 11 illustrates a video with different scenes (indicated as Scene 1 through Scene 4), where for each scene $i$, a different $f_i$ and associated $V_i$ are assigned. As shown in FIGURE 11, $f_2$ and $V_2$ correspond to the most complex scene, which requires the highest voltage and frequency.

The examples disclosed hereinabove exemplify buffer-assisted DVFS. However, this disclosure is not limited thereto. In other examples, other information derived from the encoder can be used to help the complexity estimation. In some examples, a finer granularity of threshold can be configured in the system, instead of using only the low watermark and high watermark. In some examples, the clock rate can be adapted instantly if the cycle requirements are known through the metadata.

Although the present disclosure has been described with an exemplary example, various changes and modifications may be suggested to one skilled in the art. It is intended that the present disclosure encompass such changes and modifications as fall within the scope of the appended claims.

**Claims**

1.  A method for dynamic voltage/frequency scaling, DVFS, for video processing, the method comprising:

    parsing, at a decoder, a bitstream associated with a video to determine embedded information associated with a complexity of a first portion of the video, wherein the embedded information comprise a number of non-zero macroblocks, a number of intra-coded macroblocks, a number of half-pel interpolations, and a number of alpha point de-blocking instances;

estimating, at the decoder, the complexity of the first portion of the video using the number of non-zero macroblocks, the number of intra-coded macroblocks, the number of half-pel interpolations, and the number of alpha point de-blocking instances;

determining, at the decoder, a voltage and frequency to be used for decoding the first portion of the video based on the estimated complexity; and

decoding, at the decoder, the first portion of the video at the determined voltage and frequency, wherein the complexity is estimated according to the following equation:

$$C = k_{init}n_{MB} + k_{bit}n_{bit} + k_{nz}n_{nz} + k_{intra}n_{intra} + k_{half}n_{half} + k_{\alpha}n_{\alpha}$$

where C is the estimated complexity, $n_{MB}$ is a number of total macroblocks in the first portion of the video, $n_{bit}$ is a number of bits in the first portion of the video, $n_{nz}$ is the number of non-zero macroblocks in the first portion of the video, $n_{intra}$ is the number of intra coded macroblocks in the first portion of the video, $n_{half}$ is the number of half-pel interpolations in the first portion of the video, $n_{\alpha}$ is the number of alpha-point deblocking instances in the first portion of the video, and constants $k_{init}$, $k_{bit}$, $k_{nz}$, $k_{intra}$, $k_{half}$, and $k_{\alpha}$ are unit complexity constants for performing macroblock initialization, one bit parsing, non-zero block transform and quantization, intra block prediction, inter-block half-pel interpolation, and deblock alpha points filtering, respectively.

2. The method of Claim 1, wherein the embedded information is embedded in a supplemental enhancement information, SEI, message in the bitstream.

3. The method of Claim 2, wherein the SEI message comprises a payloadType field having a value = 46.

4. The method of Claim 1, wherein the embedded information is embedded in a network abstraction layer unit, NALU, header message in the bitstream.

5. The method of Claim 4, wherein the NALU header message comprises a nal_unit_type field having a value of 24.

6. The method of Claim 1, wherein the first portion of the video is a frame, a group of pictures, GOP, a scene, or a portion defined by a time interval.

7. An apparatus for dynamic voltage/frequency scaling, DVFS, for video processing, the apparatus the apparatus being configured to perform one of the methods of claims 1 to 6.

**Patentansprüche**

1. Verfahren zur dynamischen Spannungs-/Frequenzskalierung, DVFS, für die Videoverarbeitung, das Verfahren umfassend:

Parsing eines Bitstroms, der einem Video zugeordnet ist, bei einem Decoder, um eingebettete Informationen zu bestimmen, die einer Komplexität eines ersten Abschnitts des Videos zugeordnet sind, wobei die eingebetteten Informationen eine Anzahl von Makroblöcken ungleich Null, eine Anzahl von intracodierten Makroblöcken, eine Anzahl von Halbpel-Interpolationen und eine Anzahl von Alpha-Punkt-Deblockierungsinstanzen umfassen; Schätzen der Komplexität des ersten Abschnitts des Videos unter Verwendung der Anzahl der Makroblöcke ungleich Null, der Anzahl der intracodierten Makroblöcke, der Anzahl der Halbpel-Interpolationen und der Anzahl der Alpha-Punkt-Deblockierungsinstanzen; Bestimmen einer Spannung und Frequenz am Dekodierer, die für die Dekodierung des ersten Abschnitts des Videos basierend auf der geschätzten Komplexität zu verwenden ist; und

Dekodieren des ersten Abschnitts des Videos bei der bestimmten Spannung und Frequenz am Dekodierer, wobei die Komplexität gemäß der folgenden Gleichung geschätzt wird:

$$C = k_{init}n_{MB} + k_{bit}n_{bit} + k_{nz}n_{nz} + k_{intra}n_{intra} + k_{half}n_{half} + k_{\alpha}n_{\alpha}$$

wobei C die geschätzte Komplexität ist, $n_{MB}$ eine Anzahl von Gesamtmakroblöcken im ersten Teil des Videos ist, $n_{bit}$ eine Anzahl von Bits im ersten Teil des Videos ist, $n_{nz}$ die Anzahl von Makroblöcken ungleich Null im ersten Teil des Videos ist, $n_{intra}$ die Anzahl der intracodierten Makroblöcke im ersten Teil des Videos ist, $n_{halb}$ die Anzahl der Halfpel-Interpolationen im ersten Teil des Videos ist, $n_{\alpha}$ die Anzahl der Alpha-Point-Deblockierungsinstanzen im ersten Teil des Videos und die Konstanten $k_{init}$, $k_{bit}$, $k_{nz}$, $k_{intra}$, $k_{halb}$ und $k_{\alpha}$ Einheitskomplexitätskonstanten für die Durchführung von Makroblockinitialisierung, One-Bit-Parsing, Non-Zero-Block-Transformation und - Quantisierung, Intra-Block-Vorhersage, Inter-Block-Halbpel-Interpolation bzw. Deblock-Alpha-Punkt-Filterung sind.

2. Verfahren nach Anspruch 1, wobei die eingebettete Information in eine ergänzende Erweiterungsinformation, SEI, Nachricht im Bitstrom eingebettet ist.

3. Verfahren nach Anspruch 2, wobei die SEI-Nachricht ein PayloadType-Feld mit einem Wert = 46 umfasst.

4. Verfahren nach Anspruch 1, wobei die eingebettete Information in eine Netzwerkabstraktionsschichteneinheit, NALU, Header-Nachricht im Bitstrom eingebettet ist.

5. Verfahren nach Anspruch 4, wobei die NALU-Header-Nachricht ein nal_unit_type-Feld mit einem Wert von 24 umfasst.

6. Verfahren nach Anspruch 1, wobei der erste Abschnitt des Videos ein Einzelbild, eine Gruppe von Bildern, GOP, eine Szene oder ein durch ein Zeitintervall definierter Abschnitt ist.

7. Vorrichtung zur dynamischen Spannungs-/Frequenzskalierung, DVFS, für die Videoverarbeitung, wobei die Vorrichtung konfiguriert ist, um eines der Verfahren nach den Ansprüchen 1 bis 6 durchzuführen.

**Revendications**

1. Procédé d'ajustement dynamique de tension/fréquence DVFS, soit Dynamic Voltage/Frequency Scaling, pour le traitement de vidéos, le procédé comprenant :

l'analyse syntaxique, sur un décodeur, d'un flux binaire associé à une vidéo pour déterminer de l'information intégrée associée à la complexité d'une première portion de la vidéo, dans lequel l'information intégrée comprend un nombre de macroblocs non nuls, un nombre de macroblocs intracodés, un nombre d'interpolations de demi-pixel, et un nombre d'instances de déblocage de point alpha ;
l'estimation, sur le décodeur, de la complexité de la première portion de la vidéo en utilisant le nombre de macroblocs non nuls, le nombre de macroblocs intracodés, le nombre d'interpolations de demi-pixel, et le nombre d'instances de déblocage de point alpha ; la détermination, sur le décodeur, d'une tension et d'une fréquence à utiliser pour le décodage de la première portion de la vidéo sur base de la complexité estimée ; et le décodage, sur le décodeur, de la première portion de la vidéo à la tension et à la fréquence déterminées, dans lequel la complexité est estimée conformément à l'équation suivante :

$$C = k_{init}n_{MB} + k_{bit}n_{bit} + k_{nz}n_{nz} + k_{intra}n_{intra} + k_{half}n_{half} + k_{\alpha}n_{\alpha}$$

où C est la complexité estimée, $n_{MB}$ est le nombre total de macroblocs dans la première portion de la vidéo, $n_{bit}$ est le nombre de bits dans la première portion de la vidéo, $n_{nz}$ est le nombre de macroblocs non nuls dans la première portion de la vidéo, $n_{intra}$ est le nombre de macroblocs intracodés dans la première portion de la vidéo, $n_{half}$ est le nombre d'interpolations de demi-pixels dans la première portion de la vidéo, $n_{\alpha}$ est le nombre d'instances de déblocage de point alpha dans la première portion de la vidéo, et les constantes $k_{init}$, $k_{bit}$, $k_{nz}$, $k_{intra}$, $k_{half}$ et $k_{\alpha}$ sont des constantes de complexité d'unité pour mettre respectivement en oeuvre une initialisation de macrobloc, une analyse syntaxique de bit unique, une transformée et quantification de bloc non nul, une prédiction intrabloc, une interpolation de demi-pixel entre blocs, et un filtrage de points alpha de déblocage.

2. Procédé selon la revendication 1, dans lequel l'information intégrée est intégrée dans un message d'information d'amélioration supplémentaire SEI, soit Supplemental Enhancement Information, dans le flux binaire.

**3.** Procédé selon la revendication 2, dans lequel le message SEI comprend un champ payloadType ayant une valeur de 46.

**4.** Procédé selon la revendication 1, dans lequel l'information intégrée est intégrée dans un message d'en-tête d'unité de couche d'abstraction de réseau NALU, soit Network Abstraction Layer Unit, dans le flux binaire.

**5.** Procédé selon la revendication 4, dans lequel le message d'en-tête NALU comprend un champ nal_unit_type ayant une valeur de 24.

**6.** Procédé selon la revendication 1, dans lequel la première portion de la vidéo est une trame, un groupe d'images GOP, une scène, ou une portion définie par un intervalle temporel.

**7.** Appareil d'ajustement dynamique de tension/fréquence DVFS, soit Dynamic Voltage/Frequency Scaling, pour le traitement de vidéos, l'appareil étant configuré pour mettre en oeuvre un des procédés selon l'une des revendications 1 à 6.

Video Sequence

100

GOP #1 #2

#m

#n

Video Frame/Picture

#2

VS #1

VS: video scene, typically irregular number of frames
GOP: group of picture, typically fixed number of frames

FIG.1

| NALU header | NALU payload SPS or PPS or SEI | ...... | NALU header | NALU payload Slice Data |
|---|---|---|---|---|

210      210             210      220

# FIG.2

forbidden_zero_bit

nal_ref_idc

nal_unit_type

# FIG.3

AVC bitstream + metadata

/401

DeMUX

$n_{nz}, n_{intra}, n_{half}, n_\alpha$

/403

Complexity Prediction ◄--- $k_{nz}, k_{intra}, k_{half}$

AVC bitstream

$C_{frame}$

/405

DVFS Control

$k_{init}, k_{bit}, k_\alpha$ determined
from previous frame

Frequency,
Voltage

/407

AVC Decoder
(with Complexity Profiler)

Decoded Video

# FIG.4

EP 3 014 890 B1

FIG.5

29

FIG.6

FIG.7

EP 3 014 890 B1

800

801

$u_{MVM}$, $std_{MVM}$, $u_{MVD}$, $std_{MVD}$, Sc,

$n_{zero}$, $n_{intra}$, $n_{intp}$, $n_{dblk}$, $n_{sao}$, $n_{alf}$, $n_{drf}$

Metadata Encapsulation

802

Encoder

Decoder

MacroModel

$u_{MVM}$, $std_{MVM}$, $u_{MVD}$, $std_{MVD}$, Sc, → $C(s, t, q)$

MacroModel

$n_{zero}$, $n_{intra}$, $n_{intp}$, $n_{dblk}$, $n_{sao}$, $n_{alf}$, $n_{drf}$ → $C_{frame}$

DVFS

Processor

FIG.8

Video stream

901

Video
Decoder

902

903

th$_L$
(B$_L$)

th$_H$
(B$_H$)

Memory/Framebuffer

904

Display

## FIG.9

Reach low watermark
th$_L$

Processor
ACTIVE Decoding

Processor
IDLE

Reach high watermark
th$_H$

## FIG.10

FIG.11

**EP 3 014 890 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Context, Objectives, Use Cases and Requirements for Green MPEG. ISO/IEC JTC1/SC29/; MPEG MEETING. MOTION PICTURE EXPERT GROUP, 22 April 2013
- **ZHAN MA ; HAO HU ; YAO WANG.** On Complexity Modeling of H.264/AVC Video Decoding and Its Application for Energy Efficient Decoding. *IEEE Trans. Multimedia,* December 2011, vol. 13 (6), 1240-1255
- **J. M. RABAEY.** Digital Integrated Circuits. Prentice Hall, 1996
- **V. SZE ; D. F. FINCHELSTEIN ; M. E. SINANGIL ; A. P. CHANDRAKASAN.** A 0.7-V 1.8-mW H.264/AVC 720p Video Decoder. *IEEE Journal of Solid State Circuits (JSSC), A-SSCC Special,* November 2009, vol. 44 (11), 2943-2956
- **D. SON ; C. YU ; H. KIM.** Dynamic Voltage Scaling on MPEG Decoding. *International Conference of Parallel and Distributed System (ICPADS),* June 2001
- **B. LEE ; E. NURVITADHI ; R. DIXIT ; C. YU ; M. KIM.** Dynamic Voltage Scaling Techniques for Power Efficient Video Decoding. *Journal of Systems Architecture,* November 2005, vol. 41 (10-11), 633-652
- **Z. MA ; M. XU ; Y.-F. OU ; Y. WANG.** Modeling Rate and Perceptual Quality of Video as Functions of Quantization and Frame Rate and Its Applications. *IEEE Trans. CSVT,* November 2011